# EUROPÄISCHE PATENTSCHRIFT

(11) **EP 2 232 114 B1**
(45) Veröffentlichungstag und Bekanntmachung des Hinweises auf die Patenterteilung: **20.04.2011**
(21) Anmeldenummer: 08873886.9
(22) Anmeldetag: 04.12.2008
(51) Int. Cl.: F16K 27/00, F15B 13/08

(54) **VENTILANORDNUNG**
VALVE ARRANGEMENT
SYSTEME DE SOUPAPE

(43) Veröffentlichungstag der Anmeldung: 29.09.2010
(73) Patentinhaber: FESTO AG & Co. KG, 73734 Esslingen (DE)
(72) Erfinder: BRENNER, Jakob, 73730 Esslingen (DE)
(74) Vertreter: Abel, Martin
(86) Internationale Anmeldenummer: PCT/EP2008/010266
(87) Internationale Veröffentlichungsnummer: WO 2010/066264

(56) Entgegenhaltungen:
- EP-A- 1 041 328
- DE-A1- 2 059 481
- DE-A1- 4 029 849
- US-A- 3 025 878

## Beschreibung

Die Erfindung betrifft eine Ventilanordnung, mit wenigstens einer zur Steuerung von Fluidströmen dienenden, elektrisch betätigbaren Ventileinheit, die zur Montage an einem Ventilträger der Ventilanordnung ausgebildet ist und die von mindestens einem Schraubenaufnahmekanal durchsetzt ist, in den eine zur Schraubbefestigung der Ventileinheit in eine Gewindebohrung einschraubbare Befestigungsschraube einführbar ist, wobei der Schraubenaufnahmekanal mindestens einen zur Hindurchleitung von Fluid genutzten Fluiddurchleitungskanal bildet, der wenigstens eine Fluideintrittsöffnung und wenigstens eine diesbezüglich beabstandete Fluidaustrittsöffnung aufweist, wobei entweder die Fluidaustrittsöffnung oder die Fluideintrittsöffnung von der dem Ventilträger zugewandten stirnseitigen Kanalmündung des Schraubenaufnahmekanals gebildet ist und mit der gegenüberliegenden Kanalmündung eines im Ventilträger verlaufenden Ventilträgerkanals kommuniziert.

Eine aus der EP 1 517 072 A1 bekannte Ventilanordnung enthält eine auf einem plattenartigen ventilträger montierte Ventileinheit. Die Ventileinheit ist zum einen mittels einer Hakenstruktur und zum anderen durch eine Schraubverbindung am Ven-tilträger gehalten. Die Schraubverbindung ist mittels einer Befestigungsschraube realisiert, die eine als Schraubenaufnahmekanal bezeichenbare Bohrung der Ventileinheit durchsetzt und in den Ventilträger eingeschraubt ist, wobei sie sich mit ihrem Schraubenkopf am Ventilgehäuse der Ventileinheit abstützt und diese mit dem Ventilträger verspannt. Im Innern der Ventileinheit sind diesseits und jenseits der Befestigungsschraube Ventilkanäle ausgebildet, die zum Teil neben der Befestigungsschraube vorbeigeführt sein müssen. Somit stellt die Befestigungsschraube einen Engpass dar, der nur dadurch umgangen werden kann, dass man das Ventilgehäuse mit einer ausreichend großen Breite ausbildet. Dies beeinträchtigt allerdings die Möglichkeiten zur Minimierung der Breitenabmessungen der Ventileinheit.

Aus der DE 40 29 849 A1 ist eine Brennkraftmaschine bekannt, deren Nockenwelle mit einer Einstellvorrichtung zur Variation der Ventilsteuerzeiten ausgestattet ist. An die Nockenwelle ist eine Zahnradanordnung angeschraubt, wobei die hierzu genutzte Befestigungsschraube als Hohlschraube ausgebildet und zur Fluidführung genutzt ist. Außerdem wird ein Längenabschnitt der die Befestigungsschraube aufweisenden Bohrung als Ringspalt zur Leitung einer Fluidströmung genutzt. Zur Steuerung der Fluidströme ist ein gesondert von der Nockenwelle und der Zwischenradanordnung ausgebildetes Strömungssteuerventil vorhanden, das sich elektromagnetisch betätigen lässt.

Aus der US-A-3 025 878 ist eine Ventilanordnung der eingangs genannten Art bekannt, bei der zwei Ventileinheiten mittels Zuganker miteinander verbunden sind. Die Zuganker durchsetzen jeweils einen auch zur Fluidführung genutzten Kanal und sind stirnseitig in Gewindebohrungen eingeschraubt, die in einer Mutter und in einem zur Einspeisung von Fluid dienenden Anschlussstück ausgebildet sind. Eine prinzipiell vergleichbar aufgebaute Ventilanordnung ist auch aus der DE 20 59 481 A1 bekannt.

Der vorliegenden Erfindung liegt die Aufgabe zu Grunde, eine Ventilanordnung der eingangs genannten Art so weiterzubilden, dass sich die Ventileinheit ohne Beeinträchtigung ihrer Befestigungsmöglichkeiten mit kompakteren Abmessungen verwirklichen lässt.

Zur Lösung dieser Aufgabe ist vorgesehen, dass die zum Einschrauben der Befestigungsschraube dienende Gewindebohrung im Ventilträger ausgebildet ist, wobei die am Ventilträger ausgebildete, mit dem Fluiddurchleitungskanal der Ventileinheit kommunizierende Kanalmündung neben dieser Gewindebohrung angeordnet ist.

Somit übernimmt der Schraubenaufnahmekanal eine Doppelfunktion. Zum einen erlaubt er in an sich bekannter Weise das Hindurchführen einer Befestigungsschraube, die genutzt wird, um die Ventileinheit mit dem Ventilträger zu verspannen. Zum anderen wird der Schraubenaufnahmekanal auch als Fluiddurchleitungskanal genutzt, durch den beim Betrieb der Ventileinheit verwendetes Fluid hindurchgeleitet wird. Damit erspart man sich in vielen Fällen einen zusätzlichen Ventilkanal, der sich auf Grund des im Bereich der Befestigungsschraube herrschenden Platzmangels nur durch Vergrößerung der Abmessungen der Ventileinheit sinnvoll unterbringen ließe. Je nach Gestaltung kann man einen Fluiddurchleitungskanal als Längenabschnitt eines sich ausschließlich in der Ventileinheit erstreckenden Ventilkanals nutzen oder aber als direkten Verbindungskanal mit einem im Ventilträger verlaufenden ventilträgerkanal. Wird die mindestens eine Ventileinheit mit Druckluft betrieben, kann der Fluiddurchleitungskanal beispielsweise als Entlüftungskanal benutzt werden, insbesondere zur Entlüftung eines gegebenenfalls vorhandenen Vorsteuerventils.

Der Schraubenaufnahmekanal eignet sich in vorteilhafter Weise zur Fluidübertragung zwischen der Ventileinheit und dem Ventilträger. In diesem Zusammenhang ist vorgesehen, dass die dem Ventilträger zugewandte stirnseitige Kanalmündung des

Schraubenaufnahmekanals unmittelbar als Fluideintrittsöffnung oder Fluidaustrittsöffnung fungiert, die mit einer gegenüberliegenden Kanalmündung eines Ventilträgerkanals in Verbindung steht. Der mit dem Fluiddurchleitungskanal der Ventileinheit kommunizierende Ventilträgerkanal mündet in unmittelbarer Nachbarschaft neben einer Gewindebohrung des Ventilträgers aus, in die die Befestigungsschraube zum Herstellen der erwähnten Schraubverbindung einschraubbar ist.

Vorteilhafte Weiterbildungen der Erfindung gehen aus den Unteransprüchen hervor.

Vorzugsweise ist die Ventilanordnung zusätzlich zu der mindestens einen Ventileinheit mit mindestens einem Ventilträger ausgestattet, auf dem die mindestens eine Ventileinheit unter Nutzung mindestens einer Befestigungsschraube montiert ist, insbesondere in lösbarer Weise. Es besteht die Möglichkeit, ein und denselben Ventilträger gleichzeitig mit mehreren nebeneinander angeordneten Ventileinheiten zu bestücken, bei denen jeweils ein eine Befestigungsschraube aufnehmender Schraubenaufnahmekanal als Fluiddurchleitungskanal ausgebildet ist.

Zweckmäßigerweise wird als Befestigungsschraube eine übliche Schraube verwendet, wie sie auch ohne die zusätzliche Fluidleitungsfunktion des Schraubenaufnahmekanals zur Anwendung kommen würde. Man wird jedoch darauf achten, dass der Außendurchmesser des sich in dem Schraubenaufnahmekanal erstreckenden Längenabschnittes der Befestigungsschraube zumindest in demjenigen Bereich, wo der Schraubenaufnahmekanal als Fluiddurchleitungskanal genutzt wird, einen geringeren Querschnitt als der Schraubenaufnahmekanal aufweist. Auf diese Weise ergibt sich ein im Querschnitt ringförmiger Nutzquerschnitt des Fluiddurchleitungskanals, in einem sich koaxial um die Befestigungsschraube herum erstreckenden Bereich.

Prinzipiell könnte der Fluiddurchleitungskanal auch schon dann zur Hindurchleitung eines Fluides genutzt werden, wenn die Fluideintrittsöffnung und die Fluidaustrittsöffnung auf gleicher axialer Höhe in Bezug auf die Längsachse des Schraubenaufnahmekanals liegen, jedoch in der Umfangsrichtung des Schraubenaufnahmekanals versetzt zueinander angeordnet sind. Es ergibt sich dann eine Fluidströmung im Wesentlichen um den Schaft der Befestigungsschraube herum, ohne relevante axiale Strömungskomponente. In aller Regel wird es jedoch zweckmäßig sein, Fluideintrittsöffnung und Fluidaustrittsöffnung in der Längsrichtung des Schraubenaufnahmekanals beabstandet zueinander anzuordnen, so dass der Schraubenaufnahmekanal in seiner Längsrichtung vom Fluid durchströmt wird.

Sind sowohl die Fluideintrittsöffnung als auch die Fluidaustrittsöffnung mit axialem Abstand zu den beiden stirnseitigen Kanalmündungen des Schraubenaufnahmekanals angeordnet, ergibt sich die Möglichkeit einer Hindurchleitung von Fluid durch den Schraubenaufnahmekanal, wobei letzterer als Zwischenstück eines internen Ventilkanals der Ventileinheit genutzt wird. Beispielsweise könnte ein einem Vorsteuerventil zugeordneter Entlüftungskanal der Ventileinheit einen von den Ventilmitteln des Vorsteuerventils ausgehenden Entlüftungskanalabschnitt aufweisen, der in den Schraubenaufnahmekanal mündet, wobei ein weiterer Längenabschnitt des Entlüftungskanals an anderer Stelle des Schraubenaufnahmekanals abgeht und zu einer nicht vom Ventilträger abgedeckten Außenfläche der Ventileinheit führt, wo er zur Atmosphäre ausmündet.

Eine der beiden stirnseitigen Kanalmündungen des Schraubenaufnahmekanals wird zweckmäßigerweise durch den Kopf der eingesteckten Befestigungsschraube dicht verschlossen. Insbesondere wenn derjenige Bereich des Ventilgehäuses, an dem der Schraubenkopf zur Anlage gelangt, aus einem Kunststoffmaterial besteht, wird man in vielen Fällen auf die zusätzliche Verwendung eines Dichtelementes zur fluiddichten Absperrung der zugeordneten Kanalmündung verzichten können. Zudem sind mögliche geringfügige Leckagen in solchen Fällen tolerierbar, in denen der Fluiddurchleitungskanal als Entlüftungskanal genutzt wird.

Zugunsten kompakter Querabmessungen der Ventileinheit wird man den Querschnitt des Schraubenaufnahmekanals möglichst klein wählen. Dies kann dazu führen, dass ein in der Regel einen größeren Durchmesser aufweisender Gewindeabschnitt des Schraubenschaftes in dem dem Ventilträger benachbarten Endbereich des Schraubenaufnahmekanals einen unerwünschten Strömungswiderstand hervorruft. In einem solchen Fall ist es daher zweckmäßig, den Schraubenaufnahmekanal im Bereich der dem Ventilträger zugewandten stirnseitigen Kanalmündung mit einem im Querschnitt verbreiterten Endabschnitt auszustatten, was sich in vorteilhafter Weise unmittelbar beim Spritzgießen des Ventilgehäuses durch entsprechende Ausformung der Formwerkzeuge problemlos und kostengünstig verwirklichen lässt.

Eine besondere zweckmäßige Ausführungsform der Ventileinheit verfügt über ein mindestens ein Ventilglied, vorzugsweise einen Ventilschieber aufnehmendes Gehäusehauptteil, das an wenigstens einer und vorzugsweise an beiden Stirnseiten von einem Gehäusedeckel verschlossen ist. Einer oder beide Gehäusedeckel sind hier von mindestens einem Schraubenaufnahmekanal durchsetzt, der als Fluiddurchleitungskanal genutzt wird. Auf Grund dieser Ausgestaltung können die Gehäusedeckel mit sehr kompakten Abmessungen ausgebildet werden, so dass die Baulänge der Ventileinheit gering bleibt. Müsste für die Fluiddurchleitung ein zusätzlicher Kanal in einen Gehäusedeckel integriert werden, könnte dies die Länge des Ventils leicht um mindestens 3 mm erhöhen.

Mit der Nutzung des Schraubenaufnahmekanals als Fluiddurchleitungskanal erspart man sich auch ansonsten häufig notwendige Verschlussmaßnahmen, beispielsweise sogenannte Verkugelungen, um Endabschnitte von Ventilkanälen zu verschlieβen. Der in der Regel vorhandene Schraubenkopf einer Befestigungsschraube kann unmittelbar als Verschlusselement genutzt werden.

Bei der mindestens einen Ventileinheit handelt es sich insbesondere um ein elektrofluidisch und insbesondere elektropneumatisch vorgesteuertes Mehrwegeventil. Mindestens ein elektrisch betätigbares Vorsteuerventil ist hier zweckmäßigerweise an einem mit einem Ventilschieber ausgestatteten Hauptventil montiert und bildet zusammen mit Letzterem die Ventileinheit.

Nachfolgend wird die Erfindung anhand der beiliegenden Zeichnung näher erläutert. In dieser zeigen:
- Figur 1: eine bevorzugte Ausführungsform der erfindungsgemä- β en Ventilanordnung in einer perspektivischen Dar- stellung,
- Figur 2: eine Draufsicht auf einen Ausschnitt der ventil- anordnung aus Figur 1 im Bereich einer Ventilein- heit mit Blickrichtung gemäß Pfeil II von oben her,
- Figur 3: den gleichen Ausschnitt wie in Figur 2 in einer Blickrichtung gemäß Pfeil III aus Figur 1, wobei eine Ventileinheit und ein Längenabschnitt eines die Ventileinheit tragenden Ventilträgers ersicht- lich ist,
- Figur 4: einen Längsschnitt durch die Ventilanordnung aus Figuren 1 bis 3 im Bereich einer Ventileinheit ge- mäß Schnittlinie IV-IV,
- Figur 5: einen Querschnitt gemäß Schnittlinie IV-IV aus Fi- guren 2 und 4,
- Figur 6: einen weiteren horizontalen Schnitt mit bezüglich Figur 4 um 90° verdrehter Schnittebene, gemäß Schnittlinie VI-VI aus Figuren 3 bis 5, und
- Figur 7: in einer der Figur 4 entsprechenden Längsschnitt- darstellung ein weiteres Ausführungsbeispiel der erfindungsgemäßen Ventilanordnung.

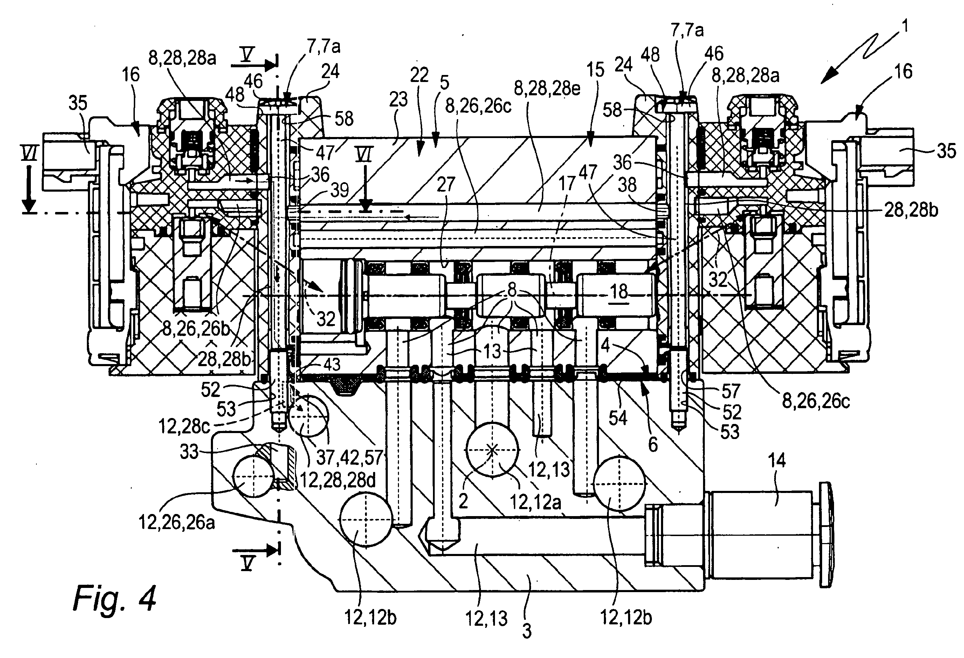

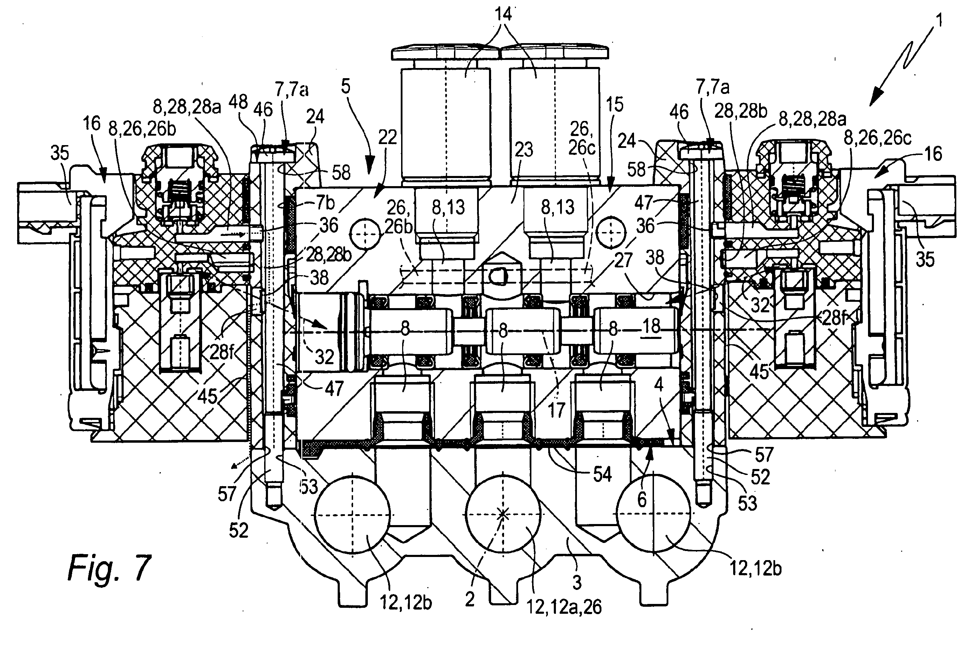

Die beiden beispielhaft abgebildeten Ventilanordnungen 1 enthalten jeweils einen sich längs einer Hauptachse 2 erstrekkenden, vorzugsweise leisten- oder plattenförmigen Ventilträger 3. Die Hauptachse 2 verläuft in Figuren 4 und 7 rechtwinkelig zur Zeichenebene.

Der Ventilträger 3 definiert eine Bestückungsfläche 4, an der er lösbar mit einer Mehrzahl insbesondere im Wesentlichen plattenförmigen Ventileinheiten 5 bestückt ist. Die Ventileinheiten 5 sind in der Achsrichtung der Hauptachse 2 aufeinanderfolgend angeordnet und mit einer Grundfläche 6 voraus auf die Bestückungsfläche 4 aufgesetzt. Durch Befestigungsmittel 7 sind die einzelnen Ventileinheiten 5 jeweils individuell am Ventilträger 3 fixiert, insbesondere in lösbarer Weise.

Jede ventileinheit 5 ist von einer Mehrzahl von Ventilkanälen 8 durchsetzt, die teilweise zu der Grundfläche 6 ausmünden. Der Ventilträger 3 ist von einer Mehrzahl von Ventilträgerkanähen 12 durchsetzt, die zumindest teilweise zu der Bestükkungsfläche 4 ausmünden. Unter den ventilträgerkanälen 12 befinden sich als Sammelkanäle ausgebildete Kanäle, und zwar im einzelnen mindestens ein an eine nicht weiter gezeigte Druckquelle angeschlossener Speisekanal 12a sowie ein oder zwei zur Druckentlastung dienende Entlastungskanäle 12b, die unter anderem mit der Atmosphäre kommunizieren. Handelt es sich wie beim Ausführungsbeispiel bei dem zu steuernden Druckmedium um Druckluft, sind die Entlastungskanäle 12b als Entlüftungskanäle ausgeführt.

Alle die vorgenannten Sammelkanäle 12a, 12b münden so zu der Bestückungsfläche 4 aus, dass sie mit jeder der dort installierten Ventileinheiten 5 in Fluidverbindung stehen. Somit ist eine fluidische Versorgung und Entsorgung sämtlicher Ventileinheiten 5 durch den Ventilträger 3 hindurch möglich.

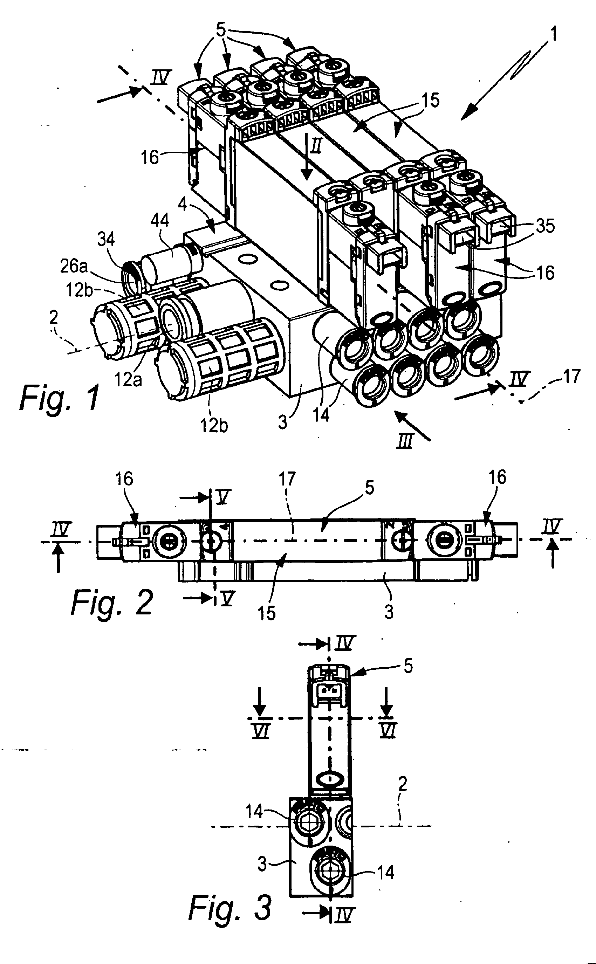

Jede Ventileinheit 5 ist in der Lage, einen oder zwei Arbeitskanäle 13 gesteuert mit Druckmedium zu beaufschlagen. Jedem Arbeitskanal 13 ist eine Anschlusseinheit 14 zugeordnet, die das Anschließen einer zu einem Verbraucher führenden Fluidleitung gestattet. Beim Ausführungsbeispiel der Figuren 1 bis 6 setzen sich die Arbeitskanäle 13 aus jeweils einem Ventilkanal 8 und einem Ventilträgerkanal 12 zusammen, die im Bereich der Bestückungsfläche 4 miteinander kommunizieren. Beim Ausführungsbeispiel der Figur 7 sind die Arbeitkanäle 13 ausschließlich von Ventilkanälen 8 gebildet, die hier an einer von der Grundfläche 6 abgewandten Außenfläche der ventileinheit 5 ausmünden.

Die Ventileinheiten 5 sind vorzugsweise als vorgesteuerte Mehrwegeventile ausgebildet. Sie verfügen in diesem Zusammenhang über ein fluidisch betätigbares Hauptventil 15 und mindestens ein mit dem Hauptventil 15 baugruppenartig zu der Ventileinheit 5 zusammengefasstes, elektrisch betätigbares Vorsteuerventil 16. Gemäß Figuren 4 und 7 sind die Ventileinheiten 5 mit jeweils zwei Vorsteuerventilen 16 ausgestattet, die an den beiden einander entgegengesetzten Stirnseiten des Hauptventils 15 montiert sind. Aus Figur 1 ist allerdings ersichtlich, dass die Ventileinheiten 6 prinzipiell auch mit nur einem Vorsteuerventil 16 ausgestattet sein können. Insgesamt haben die Ventileinheiten 5 eine längliche Gestalt und sind so auf dem Ventilträger 3 montiert, dass ihre Längsachsen 17 rechtwinkelig zu der Hauptachse 2 orientiert sind.

Das Hauptventil 15 enthält ein insbesondere als Ventilschieber ausgebildetes Ventilglied 18, das im Innern des Ventilgehäuses 22 der Ventileinheit 5 linear bewegbar aufgenommen ist. Genauer gesagt erstreckt sich das Ventilglied 18 insbesondere in einem vorzugsweise plattenförmigen Gehäusehauptteil 23, das an beiden Stirnseiten durch je einen insbesondere außen aufgesetzten Gehäusedeckel 24 verschlossen ist. Die Gehäusedeckel 24 fungieren jeweils als Träger für eines der schon erwähnten Vorsteuerventile 16.

Zumindest die Gehäusedeckel 24 bestehen zweckmäßigerweise aus einem Kunststoffmaterial.

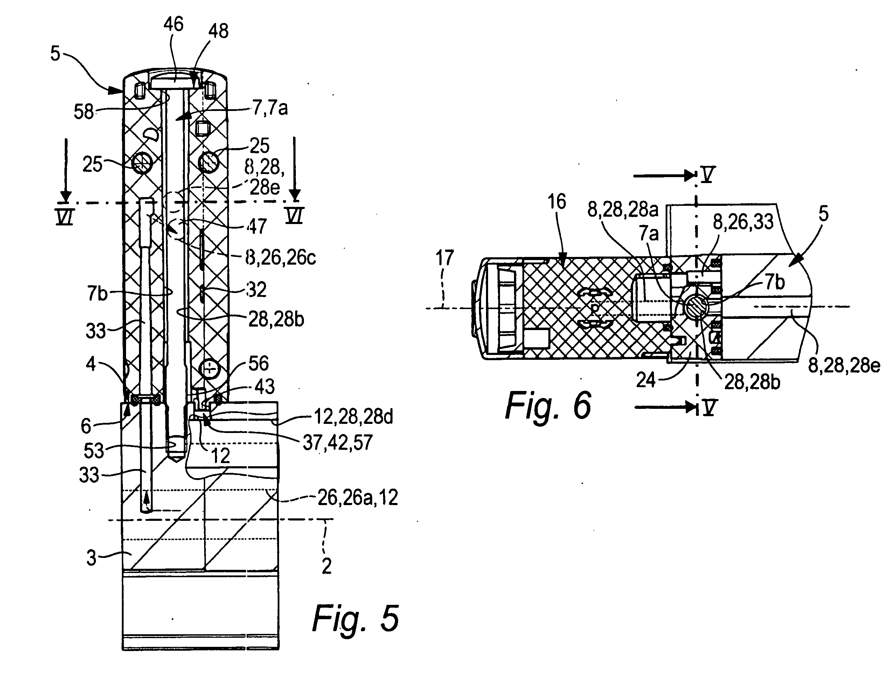

Mittels in Achsrichtung der Längsachse 17 verlaufenden Schrauben 25 (Figur 5) sind die Vorsteuerventile 16 unter Zwischenschaltung je eines Gehäusedeckels 24 mit dem Gehäusehauptteil 23 verschraubt.

Durch gesteuerte Fluidbeaufschlagung kann das Ventilglied 18 in unterschiedlichen Schaltstellungen positioniert werden. Je nach schaltstellung ergibt sich hierbei ein unterschiedliches Verbindungsmuster zwischen den Speisekanälen 12a, Entlastungskanälen 12b und Arbeitskanälen 13. Jeder Arbeitskanal 13 kann wahlweise mit dem Speisekanal 12a oder einem Entlastungskanal 12b verbunden werden, um einen angeschlossenen Verbraucher mit Fluid zu versorgen oder um Fluid vom angeschlossenen Verbraucher zurückzuführen.

Zur Fluidbeaufschlagung des Ventilgliedes 18 sind die Vorsteuerventile 16 vorhanden. Bei ihnen handelt es sich um elektrisch betätigbare Ventile, beispielsweise Magnetventile oder optional Piezoventile. Über elektrische Schnittstellenmittel 35 können den Vorsteuerventilen 16 ihre elektrischen Betätigungssignale zugeführt werden. Exemplarisch sind die Vorsteuerventile 16 als 3/2-Wegeventile ausgebildet. Sie sind jeweils eingangsseitig an einen Vorsteuer-Speisekanal 26 angeschlossen, über den sie mit einem Vorsteuermedium versorgt werden, beim Ausführungsbeispiel Druckluft. Beim Ausführungsbeispiel der Figuren 1 bis 6 umfasst der Vorsteuer-Speisekanal 26 einen sich im Ventilträger 3 erstreckenden Sammelkanal 26a, der an der Bestückungsfläche 4 mit sämtlichen Ventileinheiten 5 kommuniziert. Innerhalb der Ventileinheit 5 verzweigt sich der Vorsteuer-Speisekanal 20, wobei ein erster Kanalast 26b zu dem links abgebildeten Vorsteuerventil 16 führt, während ein zweiter Kanalast 26c durch das Gehäusehauptteil 23 hindurch zum rechts liegenden zweiten Vorsteuerventil 16 führt.

Beim Ausführungsbeispiel der Figur 7 fungiert der das zu steuernde Fluid liefernde Speisekanal 12a auch als Vorsteuer-Speisekanal 26. Dieser spaltet sich im Innern des Gehäusehauptteils 23 in einen ersten und einen zweiten Kanalast 26b, 26c auf, die zu je einem der beiden Vorsteuerventile 16 führen.

Das Ventilglied 18 ist in einer Ventilkammer 27 des Ventilgehäuses 22 axial verschiebbar aufgenommen. Von jedem Vorsteuerventil 16 führt ein in Figuren 4 und 7 nur strichpunktiert angedeuteter Vorsteuer-Arbeitskanal 32 derart zu der Ventilkammer 27, dass über den Vorsteuer-Arbeitskanal 32 in die Ventilkammer 27 eingespeistes Vorsteuermedium eine axiale Stellkraft auf das Ventilglied 18 ausübt und dieses umschalten kann. Die Vorsteuer-Arbeitskanäle 32 kommunizieren insbesondere mit den beiden axialen Endabschnitten der Ventilkammer 27, die eine Antriebskammer bilden und die jeweils von einer Stirnfläche des Ventilgliedes 18 begrenzt sind, auf die das Vorsteuermedium einwirken kann.

An dieser Stelle sei darauf hingewiesen, dass die ventileinheiten 5 vorzugsweise mit Druckluft betrieben werden, und zwar sowohl hinsichtlich des zu steuernden Mediums als auch hinsichtlich des Vorsteuermediums. Andere gasförmige Medien oder auch flüssige Medien können jedoch ebenfalls verwendet werden.

In Figur 4 ist im Bereich des Sammelkanals 26a in einem Ausbruch gezeigt, wie der Vorsteuer-Speisekanal 26 in einer bezüglich der Schnittebene versetzten Ebene mit einem ersten Kanalabschnitt 33 abgeht, der dann über die Schnittstelle zwischen Bestückungsfläche 4 und Grundfläche 6 hinweg in den Gehäusedeckel 24 hinein verläuft (Figur 5) und sich dort in die beiden Kanaläste 26b, 26c aufspaltet. In Figur 1 ist bei 34 eine am Ventilträger 3 fixierte Anschlusseinheit gezeigt, die mit dem Sammelkanal 26a verbunden ist und an die sich eine das Vorsteuermedium liefernde Fluidleitung anschließen lässt. Beim Ausführungsbeispiel der Figur 7 wird das Vorsteuermedium wie erwähnt innerhalb einer jeweiligen Ventileinheit 5 unmittelbar von dem zu steuernden, über den Speisekanal 12a eingespeisten Druckmedium abgezweigt.

Jedes Vorsteuerventil 16 ist an einen Vorsteuer-Entlastungskanal 28 angeschlossen, dessen anderes Ende mit der Atmosphäre in Verbindung steht. Bei einer mit Druckluft als Vorsteuermedium betriebenen Ventileinheit 5 bildet der Vorsteuer-Entlastungskanal 28 einen Entlüftungskanal. Jedes Vorsteuerventil 16 kann derart elektrisch angesteuert werden, dass es den ihm zugeordneten Vorsteuer-Arbeitskanal 32 mit entweder dem Vorsteuer-Speisekanal 26 oder dem Vorsteuer-Entlastungskanal 28 verbindet. Auf diese Weise kann das Umschalten und Positionieren des Ventilgliedes 18 des Hauptventils 15 hervorgerufen werden. Es handelt sich bei den ventileinheiten 5 also um elektro-fluidisch vorgesteuerte Mehrwegeventile, wobei das Hauptventil 15 exemplarisch ein 5/2-Wegeventil ist und die Vorsteuerventile 16 eine 3/2-Funktionalität aufweisen. Bei den Vorsteuerventilen 16 handelt es sich insbesondere um Magnetventile, doch kann es sich auch um andere Ventilarten handeln, beispielsweise um Piezoventile. Für die Einspeisung der elektrischen Betätigungssignale sind sie jeweils mit einer elektromechanischen Schnittstelle 35 ausgestattet.

Beim Ausführungsbeispiel der Figuren 1 bis 6 verläuft der Vorsteuer-Entlastungskanal 28 teils in der Ventileinheit 5 und teils im Ventilträger 3. Die unmittelbare Schnittstelle zur Atmosphäre befindet sich am Ventilträger 3. Allerdings ist auch eine Bauform möglich, bei der sich der Vorsteuer-Entlastungskanal 28 ausschließlich in der Ventileinheit 5 erstreckt und die Schnittstelle zur Atmosphäre an dieser Ventileinheit 5 ausgebildet ist. Eine solche Modifikation vermittelt die Bauform gemäß Figur 7.

Beiden Ausführungsbeispielen ist gemeinsam, dass der Vorsteuer-Entlastungskanal 28 pro Vorsteuerventil 16 einen ersten Kanalabschnitt 28a aufweist, der das Gehäuse des Vorsteuerventils 16 durchsetzt und sich in den zugeordneten Gehäuse-deckel 24 hinein fortsetzt. Im Innern dieses Gehäusedeckels 34 mündet der erste Kanalabschnitt 28a über eine erste Fluideintrittsöffnung 36 in einen sich in der Höhenrichtung der Ventileinheit 5, d.h. rechtwinkelig zu der Grundfläche 6 erstreckenden zweiten Kanalabschnitt, der im Folgenden als Fluiddurchleitungskanal 28b bezeichnet sei.

Der Fluiddurchleitungskanal 28b erstreckt sich beim Ausführungsbeispiel der Figur 4 innerhalb des links abgebildeten Gehäusedeckels 24 bis hin zu der Grundfläche 6, an der er mit einer unteren stirnseitigen Kanalmündung 42 ausmündet. Über diese kommuniziert er mit einer gegenüberliegend an der Bestückungsfläche 4 des Ventilträgers 3 ausgebildeten Kanalmündung 43 eines in Figur 4 gestrichelt angedeuteten Ventilträgerkanals 12, der einen dritten Kanalabschnitt 28c des Vorsteuer-Entlastungskanals 28 bildet und mit einem Entlastungs-Sammelkanal 28d kommuniziert, der den Ventilträger 3 in Achsrichtung seiner Hauptachse 2 durchsetzt. In der gleichen Weise sind bei dem Ausführungsbeispiel der Figuren 1 bis 6 die Fluiddurchleitungskanäle 28b sämtlicher Ventileinheiten 5 an den Entlastungs-Sammelkanal 28d angeschlossen, über den die gemeinsame Verbindung zur Atmosphäre hergestellt wird, insbesondere über einen in die stirnseitige Ausmündung des Entlastungs-Sammelkanals 28d eingeschraubten Schalldämpfer 44 (Figur 1) .

Die Abluft aus dem in Figur 4 links abgebildeten Vorsteuerventil 16 tritt also über die erste Fluideintrittsöffnung 36 in den Fluiddurchleitungskanal 28b ein und verlässt diesen wieder über eine axial beabstandete erste Fluidaustrittsöffnung 37, die von der unteren stirnseitigen Kanalmündung 42 gebildet ist.

Innerhalb des in Figur 4 rechts liegenden Gehäusedeckels 24 erstreckt sich der Fluiddurchleitungskanal 28b nur ein Stück weit in Richtung der Grundfläche 6 und endet mit relativ großem Abstand vor dieser. Er kommuniziert innerhalb des betreffenden Gehäusedeckels 24 mit einer bezüglich der ersten Fluideintrittsöffnung 36 axial beabstandeten zweiten Fluidaustrittsöffnung 38, die seitwärts orientiert ist und die in einen vierten Kanalabschnitt 28e des Vorsteuer-Entlastungskanals 28 übergeht, der in Achsrichtung der Längsachse 17 zunächst den zugeordneten Gehäusedeckel 24 und anschließend das Gehäusehauptteil 23 durchsetzt, um anschlieβend, im Innern des links angeordneten Gehäusedeckels 24, mit einer zweiten Fluideintrittsöffnung 39 seitlich in den den linken Gehäusedeckel 24 durchsetzenden Fluiddurchleitungskanal 28b einzumünden.

Auf diese Weise erfolgt bei dem Ausführungsbeispiel der Figuren 1 bis 6 die Druckentlastung beider Vorsteuerventile 16 jeder Ventileinheit 5 gemeinsam durch den dem einen, exemplarisch links abgebildeten Vorsteuerventil 16 zugeordneten Fluiddurchleitungskanal 28b hindurch und über den daran angeschlossenen, gemeinsam zugeordneten Entlastungs-Sammelkanal 28d. Die Abluft des linken Vorsteuerventils 16 tritt über die erste Fluideintrittsöffnung 36 und die Abluft des rechten Vorsteuerventils 16 über die zweite Fluideintrittsöffnung 39 in den linken Fluiddurchleitungskanal 28b ein und verlässt diesen wieder durch die erste Fluidaustrittsöffnung 37 hindurch.

Beim Ausführungsbeispiel der Figur 7 erfolgt die Druckentlastung der beiden Vorsteuerventile 16 über je einen eigenen Vorsteuer-Entlastungskanal 28. Die beiden schon angesprochenen Fluiddurchleitungskanäle 28b stehen hier nicht in Verbindung miteinander, sondern sind jeweils über eine erste Fluideintrittsöffnung 36 an den ersten Kanalabschnitt 28a des jeweils zugeordneten Vorsteuerventils 16 angeschlossen und kommunizieren des Weiteren über eine bezüglich der ersten Fluideintrittsöffnung 36 axial beabstandete zweite Fluidaustrittsöffnung 38 mit einem fünften Kanalabschnitt 28f des Vorsteuer-Entlastungskanals 28, der unmittelbar zu einer Außenfläche des Ventilgehäuses 22 ausmündet. Diese Ausmündung liegt exemplarisch in einem Spalt 45 zwischen dem Gehäusedeckel 24 und dem Gehäuse des daran befestigten Vorsteuerventils 16, durch den hindurch die Abluft zur Umgebung austreten kann.

Die Strömung der Abluft ist in Figuren 4 und 7 jeweils durch Pfeile und gepunktete Linien angedeutet.

Die zur Fixierung der Ventileinheiten 5 am Ventilträger 3 genutzten Befestigungsmittel 7 beinhalten bei beiden Ausführungsformen jeweils zwei Befestigungsschrauben 7a, die jeweils einen der Gehäusedeckel 24 in der Höhenrichtung der Ventileinheit 5 durchsetzen und in den Ventilträger 3 eingeschraubt sind. Jeder Gehäusedeckel 24 ist von einem im Folgenden als Schraubenaufnahmekanal 7b bezeichneten Durchgangsloch durchsetzt, durch das sich eine der Befestigungsschrauben 7a hindurch erstreckt.

Jede Befestigungsschraube 7a verfügt am einen, in der Zeichnung oben liegenden Ende über einen Schraubenkopf 46, der einen größeren Querschnitt als ein sich daran anschließender Schraubenschaft 47 aufweist und sich an einer der Grundfläche 6 entgegengesetzten Abstützfläche 48 des Gehäusedeckels 24 abstützt. An dem dem Schraubenkopf 46 entgegengesetzten Endabschnitt ist der Schraubenschaft 47 mit einem Gewindeabschnitt 52 versehen, der über die Grundfläche 6 vorsteht und in eine zur Bestückungsfläche 4 offene Gewindebohrung 53 des Ventilträgers 3 eingeschraubt ist. Bei festgezogener Befestigungsschraube 7a drückt diese mit ihrem Schraubenkopf 46 auf den Gehäusedeckel 24 und spannt somit die gesamte Ventileinheit 5 gegen die Bestückungsfläche 4. Hierbei werden auch zwischen der Bestückungsfläche 4 und der Grundfläche 6 angeordnete Dichtungsmittel 54 verpresst, die um die dortigen Kanalmündungen herum angeordnet sind und eine fluiddichte Verbindung zwischen den Ventilträgerkanälen 12 und den Ventilkanälen 8 schaffen.

Der besondere Vorteil der Erfindung besteht darin, dass die oben erwähnten Fluiddurchleitungskanäle 28b unmittelbar von den Schraubenaufnahmekanälen 7b gebildet sind. Dies erspart die Ausbildung mindestens eines zusätzlichen Fluidkanals in der Ventileinheit 5 und insbesondere im Gehäusedeckel 24, so dass die Ventileinheiten 5 in der Achsrichtung der Hauptachse 2 und auch quer dazu mit sehr geringen Abmessungen ausgebildet werden können.

Bei dem Ausführungsbeispiel der Figur 7 besteht der Fluiddurchleitungskanal 28b aus demjenigen Längenabschnitt des Schraubenaufnahmekanals 7b, der sich zwischen der ersten Fluideintrittsöffnung 36 und der zweiten Fluidaustrittsöffnung 38 erstreckt. Diese beiden Öffnungen sind jeweils mit axialem Abstand zu der an der Grundfläche 6 angeordneten unteren stirnseitigen Kanalmündung 57 sowie zu der entgegengesetzten, im Bereich der Abstützfläche 48 angeordneten oberen stirnseitigen Kanalmündung 58 des Schraubenaufnahmekanals 7b angeordnet. Die obere stirnseitige Kanalmündung 58 ist durch den Schraubenkopf 46 dicht verschlossen, der mit der die obere stirnseitige Kanalmündung 58 umrahmenden Abstützfläche 48 verspannt ist. Ein zusätzliches Dichtelement erübrigt sich hier, weil der Gehäusedeckel 24 aus einem Kunststoffmaterial besteht. Insbesondere wenn der Gehäusedeckel 24 aus Metall hergestellt ist, kann allerdings zwischen den Schraubenkopf 46 und die Abstützfläche 48 auch ein zusätzlicher Dichtungsring eingesetzt werden.

Die Art des Abschlusses der oberen stirnseitigen Kanalmündung 58 gilt für beide Ausführungsbeispiele.

Das Ausführungsbeispiel der Figur 7 macht auch nochmals deutlich, dass hier sowohl die erste Fluideintrittsöffnung 36 als auch die zweite Fluidaustrittsöffnung 38 die Verbindung zu einem Ventilkanal 8 herstellen, also keine direkte Verbindung zum Ventilträger 3.

Beim Ausführungsbeispiel der Figuren 1 bis 6 ist bei dem rechten Gehäusedeckel 24 der Fluiddurchleitungskanal 28b vergleichbar der Bauform der Figur 7 an die erste Fluideintrittsöffnung 36 und an die zweite Fluidaustrittsöffnung 38 angeschlossen, wobei diese Öffnungen seitlich am Schraubenaufnahmekanal 7b angeordnet sind und außerdem in der Längsrichtung des Schraubenaufnahmekanals 7b mit Abstand zueinander angeordnet sind.

Während bei dem rechten Gehäusedeckel 24 der Figur 4 wie beim Ausführungsbeispiel der Figur 7 jeweils eine Fluideintrittsöffnung und eine Fluidaustrittsöffnung mit dem Fluiddurchleitungskanal 28b bzw. dem Schraubenaufnahmekanal 7b kommunizieren, sind dem in Figur 4 linken Gehäusedeckel 24 insgesamt drei solcher mit dem Fluiddurchleitungskanal 28b kommunizierender Öffnungen zugeordnet. Zum einen sind da die erste Fluideintrittsöffnung 36 und die zweite Fluideintrittsöffnung 39, durch die jeweils die Abluft des angeschlossenen Vorsteuerventils 16 in den Fluiddurchleitungskanal 28b eingespeist wird. Zum anderen ist da die erste Fluidaustrittsöffnung 37, die abweichend von den bisherigen Ausführungsbeispielen nicht seitlich am Schraubenaufnahmekanal 7b angeordnet sind, sondern direkt von der an der Grundfläche 6 liegenden unteren stirnseitigen Kanalmündung 57 des Schraubenkanals 7b gebildet ist. Über diese kommuniziert der Fluiddurchleitungskanal 28b direkt mit einem Ventilträgerkanal 12, nämlich mit dem an den Entlastungs-Sammelkanal 28d angeschlossenen dritten Kanalabschnitt 28c.

Es versteht sich, dass auf Grund der eingesteckten Befestigungsschraube 7a nicht der gesamte Querschnitt des Schraubenaufnahmekanals 7b zur Fluiddurchführung nutzbar ist. Der zur Fluidführung genutzte Querschnitt ist zumindest größtenteils ringförmig ausgebildet und erstreckt sich koaxial um die Befestigungsschraube 7a herum, so dass man von einem Ringspalt sprechen kann. Selbst wenn man den Querschnitt des Schraubenaufnahmekanals 7b zugunsten eines vergrößerten Strömungsquerschnittes etwas größer wählt als standardmäßig vorhandene Schraubenaufnahmekanäle, verringert sich gleichwohl das zur Strömungsführung notwendige Volumen des Gehäusedeckels 24 erheblich im Vergleich zu einer Bauform, bei der ein Fluiddurchleitungskanal zusätzlich zum Schraubenaufnahmekanal ausgebildet wird.

Damit im Bereich des Gewindeabschnittes 52 kein störender Engpass für das strömende Fluid auftritt, kann der Schraubenaufnahmekanal 7b im Bereich der unteren stirnseitigen Kanalmündung 57 einen erweiterten Kanalendabschnitt 56 aufweisen, der sich beim Spritzgießen des Gehäusedeckels 24 problemlos einformen lässt. Die mit dem Fluiddurchleitungskanal 28b kommunizierende Kanalmündung 43 des Ventilträgers 3 sitzt in diesem Fall - wie insbesondere aus Figur 5 ersichtlich - mit geringem Abstand neben der Gewindebohrung 53.

Beim Ausführungsbeispiel ist von Vorteil, dass kein Vorsteuer-Entlastungskanal 28 seitlich an den Schraubenaufnahmekanälen 7b vorbeigeführt werden muss. Es wird unmittelbar der Schraubenaufnahmekanal 7b genutzt, um die Abluft abzuführen. Der somit eingesparte Raum kann für andere Maßnahmen genutzt werden und ermöglicht insbesondere die Realisierung sehr kompakter Querabmessungen des Ventilgehäuses 22.

Das erfindungsgemäße Prinzip lässt sich nicht nur auf den Vorsteuer-Entlastungskanal 28 anwenden. Prinzipiell kann jeder Ventilkanal 8 abschnittsweise von einem Schraubenaufnahmekanal 7b gebildet sein, wenn sich dies für die Kanalführung als vorteilhaft erweit. Es wäre auch denkbar, eine Fluidströmung innerhalb eines Schraubenaufnahmekanals zu einander entgegengesetzten axialen Richtungen aufzuspalten und dadurch wenigstens zwei Fluiddurchleitungskanäle 28b innerhalb ein und desselben Schraubenaufnahmekanals 7b zu realisieren.

Die erfindungsgemäße Maßnahme lässt sich bei jedem zur Befestigung der Ventileinheit 5 dienenden Schraubenaufnahmekanal verwirklichen. Die Anzahl der als Fluiddurchleitungskanal 28b genutzten Schraubenaufnahmekanäle 7b kann geringer sein als die tatsächliche Anzahl vorhandener Schraubenaufnahmekanäle 7b.

Die Erfindung lässt sich auch mit einem Schraubenaufnahmekanal 7b nutzen, der nicht einen Gehäusedeckel 24 durchsetzt, sondern beispielsweise in dem Gehäusehauptteil 23 ausgebildet ist. Prinzipiell ergeben sich die Vorteile bei jedem Schraubenaufnahmekanal 7b, der, an welcher Stelle auch immer, das Ventilgehäuse 22 einer Ventileinheit 5 durchsetzt.

Die zur Erläuterung der diversen Kanalabschnitte, Öffnungen und Mündungen verwendeten Zahlworte wie "erster", "zweiter", etc. wurden lediglich zur Erleichterung des Verständnisses gewählt und stellen keine Einschränkung auf eine bestimmte Anzahl oder Reihenfolge von Kanalabschnitten, Öffnungen und Mündungen dar.

Bei beiden Ausführungsbeispielen ist auch noch von Vorteil, dass als Befestigungsschrauben 7a konventionelle Schrauben verwendbar sind, also übliche zylindrische Schrauben, die keinerlei umfangsseitiger Abflachungen oder sonstiger außerordentlicher Formgebungen bedürfen und auch nicht als Hohlschrauben ausgebildet sein müssen.

## Patentansprüche

1. Ventilanordnung, mit wenigstens einer zur Steuerung von Fluidströmen dienenden, elektrisch betätigbaren Ventileinheit (5), die zur Montage an einem Ventilträger (3) der Ventilanordnung (1) ausgebildet ist und die von mindestens einem Schraubenaufnahmekanal (7b) durchsetzt ist, in den eine zur Schraubbefestigung der Ventileinheit (5) in eine Gewindebohrung (53) einschraubbare Befestigungsschraube (7a) einführbar ist, wobei der Schraubenaufnahmekanal (7b) mindestens einen zur Hindurchleitung von Fluid genutzten Fluiddurchleitungskanal (28b) bildet, der wenigstens eine Fluideintrittsöffnung (36, 39) und wenigstens eine diesbezüglich beabstandete Fluidaustrittsöffnung (37, 38) aufweist, wobei entweder die Fluidaustrittsöffnung oder die Fluideintrittsöffnung von der dem Ventilträger (3) zugewandten stirnseitigen Kanalmündung (42) des Schraubenaufnahmekanals (7b) gebildet ist und mit der gegenüberliegenden Kanalmündung (43) eines im Ventilträger (3) verlaufenden Ventilträgerkanals (12) kommuniziert, **dadurch gekennzeichnet, dass** die zum Einschrauben der Befestigungsschraube (7a) dienende Gewindebohrung (53) im Ventilträger (3) ausgebildet ist, wobei die am Ventilträger (3) ausgebildete, mit dem Fluiddurchleitungskanal (28b) der Ventileinheit (5) kommunizierende Kanalmündung (43) neben dieser Gewindebohrung (53) angeordnet ist.

2. Ventilanordnung nach Anspruch 1, **dadurch gekennzeichnet, dass** sie mindestens einen Ventilträger (3) aufweist, der mit mindestens einer Ventileinheit (5) bestückt ist, wobei die Ventileinheit (5) von wenigstens einer in den Ventilträger (3) eingeschraubten Befestigungsschraube (7a) durchsetzt ist und mindestens ein von einer Befestigungsschraube (7a) durchsetzter Schraubenaufnahmekanal (7b) der Ventileinheit (5) auch einen zur Hindurchleitung von Fluid genutzten Fluiddurchleitungskanal (28b) bildet.

3. Ventilanordnung nach Anspruch 1 oder 2, **dadurch gekennzeichnet, dass** der zur Fluidführung nutzbare Querschnitt des Fluiddurchleitungskanals (28b) zumindest partiell ringförmig ausgebildet ist und sich koaxial um die zugeordnete Befestigungsschraube (7a) herum erstreckt.

4. Ventilanordnung nach einem der Ansprüche 1 bis 3, **dadurch gekennzeichnet, dass** die Fluideintrittsöffnung (36, 39) und die Fluidaustrittsöffnung (37, 38) in der Längsrichtung des Schraubenaufnahmekanals (7b) beabstandet zueinander angeordnet sind.

5. Ventilanordnung nach einem der Ansprüche 1 bis 4, **dadurch gekennzeichnet, dass** die Fluideintrittsöffnung (36, 39) und/oder die Fluidaustrittsöffnung (37, 38) mit axialem Abstand zu den beiden stirnseitigen Kanalmündungen (57, 58) des Schraubenaufnahmekanals (7b) seitlich am Schraubenaufnahmekanal (7b) angeordnet ist/sind.

6. Ventilanordnung nach einem der Ansprüche 1 bis 5, **dadurch gekennzeichnet, dass** eine der beiden stirnseitigen Kanalmündungen (55) des Schraubenaufnahmekanals (7b) von einem Schraubenkopf (47) der eingesteckten Befestigungsschraube (7a) verschlossen ist.

7. Ventilanordnung nach Anspruch 6, **dadurch gekennzeichnet, dass** der Schraubenkopf (46) ohne zusätzliches Dichtelement dicht mit dem Ventilgehäuse (22) der Ventileinheit (5) verspannt ist, wobei zumindest der mit dem Schraubenkopf (46) kooperierende Abschnitt des Ventilgehäuses (22) zweckmäßigerweise aus Kunststoffmaterial besteht.

8. Ventilanordnung nach einem der Ansprüche 1 bis 7, **dadurch gekennzeichnet, dass** sowohl die Fluideintrittsöffnung (36, 39) als auch die Fluidaustrittsöffnung (38) mit jeweils einem in der Ventileinheit (5) verlaufenden Ventilkanal (8) kommunizieren.

9. Ventilanordnung nach einem der Ansprüche 1 bis 8, **dadurch gekennzeichnet, dass** der Schraubenaufnahmekanal (7b) im Bereich der dem Ventilträger (3) zugewandten stirnseitigen Kanalmündung (42) einen im Querschnitt erweiterten Kanalendabschnitt (56) aufweist, in dem sich zweckmäßigerweise ein einen geringeren Querschnitt aufweisender Gewindeabschnitt (52) des Schraubenschaftes (47) der Befestigungsschraube (7a) erstreckt.

10. Ventilanordnung nach einem der Ansprüche 1 bis 9, **dadurch gekennzeichnet, dass** der Fluiddurchleitungskanal (28b) einen Längenabschnitt eines die Ventileinheit (5) durchsetzenden und mit der Atmosphäre kommunizierenden Druckentlastungskanals (28) bildet.

11. Ventilanordnung nach einem der Ansprüche 1 bis 10, **dadurch gekennzeichnet, dass** die Ventileinheit (5) ein Ventilgehäuse (22) mit einem mindestens ein Ventilglied (18) aufnehmenden Gehäusehauptteil (23) und wenigstens einem stirnseitig an das Gehäusehauptteil (23) angesetzten Gehäusedeckel (24) aufweist, wobei der mindestens eine als Fluiddurchleitungskanal (28b) genutzte Schraubenaufnahmekanal (7b) den Gehäusedeckel (24) durchsetzt.

12. Ventilanordnung nach einem der Ansprüche 1 bis 11, **dadurch gekennzeichnet, dass** die mindestens eine Ventileinheit (5) als elektro-fluidisch vorgesteuertes Mehrwegeventil ausgebildet ist.

13. Ventilanordnung nach einem der Ansprüche 1 bis 12, **dadurch gekennzeichnet, dass** sie mehrere nebeneinander am gleichen Ventilträger (3) montierte oder montierbare Ventileinheiten (5) enthält.

## Claims

1. Valve assembly with at least one electrically actuable valve unit (5) used for the control of fluidic flows and designed for mounting on a valve carrier (3) of the valve assembly (1) and through which passes at least one screw locating channel (7b) in which may be inserted a fixing screw (7a) which may be screwed into a threaded hole (53) for screw fastening of the valve unit (5), wherein the screw locating channel (7b) forms at least one fluid flow passage (28b) used for the channelling of fluid and which has at least one fluid inlet port (36, 39) and at least one fluid outlet port (37, 38) at a distance from the former, wherein either the fluid outlet port or the fluid inlet port is formed by the end passage mouth (42) of the screw locating channel (7b) facing the valve carrier (3) and communicates with the opposite passage mouth (43) of a valve carrier passage (12) running in the valve carrier (3), **characterised in that** the threaded hole (53) used for screwing-in the fixing screw (7a) is formed in the valve carrier (3), wherein the passage mouth (43) formed on the valve carrier (3) and communicating with the fluid flow passage (28b) of the valve unit (5) is located alongside this threaded hole (53).

2. Valve assembly according to claim 1, **characterised in that** it has at least one valve carrier (3) which is equipped with at least one valve unit (5), wherein at least one fixing screw (7a) screwed into the valve carrier (3) passes through the valve unit (5), and at least one screw locating channel (7b) of the valve unit (5) through which a fixing screw (7a) passes also forms a fluid flow passage (28b) used for the channelling of fluid.

3. Valve assembly according to claim 1 or 2, **characterised in that** the cross-section of the fluid flow passage (28b) which may be used for the channelling of fluid is at least partly annular and extends coaxially around the assigned fixing screw (7a).

4. Valve assembly according to any of claims 1 to 3, **characterised in that** the fluid inlet port (36, 39) and the fluid outlet port (37, 38) are spaced apart from one another in the longitudinal direction of the screw locating channel (7b).

5. Valve assembly according to any of claims 1 to 4, **characterised in that** the fluid inlet port (36, 39) and/or the fluid outlet port (37, 38) is/are located to the side of the screw locating channel (7b), with axial clearance from the two end-face passage mouths (57, 58) of the screw locating channel (7b).

6. Valve assembly according to any of claims 1 to 5, **characterised in that** one of the two end-face passage mouths (55) of the screw locating channel (7b) is closed by a screw head (47) of the inserted fixing screw (7a).

7. Valve assembly according to claim 6, **characterised in that** the screw head (46) is clamped tightly to the valve casing (22) of the valve unit (5) with no additional sealing element, wherein at least the section of the valve casing (22) cooperating with the screw head (46) is expediently made of plastic material.

8. Valve assembly according to any of claims 1 to 7, **characterised in that** both the fluid inlet port (36, 39) and also the fluid outlet port (38) communicate in each case with one valve passage (8) running in the valve unit (5).

9. Valve assembly according to any of claims 1 to 8, **characterised in that** the screw locating channel (7b) has in the area of the end-face passage mouth (42) facing the valve carrier (3) a passage end section (56) with enlarged cross-section, into which extends expediently a threaded section (52) of the screw shank (47) of the fixing screw (7a) with a smaller cross-section.

10. Valve assembly according to any of claims 1 to 9, **characterised in that** the fluid flow passage (28b) forms a section of the length of a pressure-relief passage (28) passing through the valve unit (5) and communicating with the atmosphere.

11. Valve assembly according to any of claims 1 to 10, **characterised in that** the valve unit (5) has a valve casing (22) with a casing main section (23) accommodating at least one valve member (18) and at least one casing cover (24) attached to the end face of the casing main section (23), wherein the screw locating channel or channels (7b) used as fluid flow passage(s) (28b) pass through the casing cover (24).

12. Valve assembly according to any of claims 1 to 11, **characterised in that** the valve unit or units (5) is/are designed as one or more electro-fluidic piloted multiway valve(s).

13. Valve assembly according to any of claims 1 to 12, **characterised in that** it contains several valve units (5) mounted or mountable side by side on the same valve carrier (3).

## Revendications

1. Système de vannes, comportant au moins une unité de vannes (5) à actionnement électrique, qui est destinée à commander les flux de fluide et qui est réalisée pour être montée sur un support de vannes (3) du système de vannes (1) et à travers laquelle passe au moins un conduit de réception de vis (7b), dans lequel on peut introduire une vis de fixation (7a) propre à être vissée dans une forure taraudée (53) pour la fixation par vissage de l'unité de vannes (5), le conduit de réception de vis (7b) formant au moins un conduit de circulation du fluide (28b) utilisé pour le passage du fluide, lequel comporte au moins une ouverture d'admission du fluide (36, 39) et au moins une ouverture de sortie du fluide (37, 38) située à distance de cette dernière, sachant que soit l'ouverture d'admission du fluide, soit l'ouverture de sortie du fluide est formée par la bouche (42) frontale, orientée vers le support de vannes (3), du conduit de réception de vis (7b) et communique avec la bouche (43) opposée d'un conduit (12) s'étendant dans le support de vannes (3), **caractérisé en ce que** la forure taraudée (53) destinée au vissage de la vis de fixation (7a) est réalisée dans le support de vannes (3), sachant que la bouche du conduit (43) qui est réalisée sur le support de vannes (3) e qui communique avec le conduit de circulation du fluide (28b) de l'unité de vannes (5), est disposée à côté de ladite forure taraudée (53).

2. Système de vannes selon la revendication 1, **caractérisé en ce qu'**il comporte au moins un support de vannes (3), qui est équipé d'au moins une unité de vannes (5), ladite unité de vannes (5) étant traversée par au moins une vis de fixation (7a) vissée dans le support de vannes (3), et au moins un conduit de réception de vis (7b), traversé par une vis de fixation (7a), de l'unité de vannes (5) formant également un conduit de circulation du fluide (28b) utilisé pour le passage du fluide.

3. Système de vannes selon la revendication 1 ou 2, **caractérisé en ce que** la section du conduit de circulation du fluide (28b), utilisable pour le guidage du fluide, est réalisée au moins partiellement sous forme annulaire et s'étend coaxialement autour de la vis de fixation (7a) associée.

4. Système de vannes selon l'une quelconque des revendications 1 à 3, **caractérisé en ce que** l'ouverture d'admission du fluide (36, 39) et l'ouverture de sortie du fluide (37, 38) sont disposées à distance l'une de l'autre dans la direction longitudinale du conduit de réception de vis (7b).

5. Système dé vannes selon l'une quelconque des revendications 1 à 4, **caractérisé en ce que** l'ouverture d'admission du fluide (36, 39) et/ou l'ouverture de sortie du fluide (37, 38) est/sont disposée(s) à une distance axiale des deux bouches (57, 58) frontales du conduit de réception de vis (7b), latéralement au niveau du conduit de réception de vis (7b).

6. Système de vannes selon l'une quelconque des revendications 1 à 5, **caractérisé en ce que** l'une des deux bouches (55) frontales du conduit de réception de vis (7b) est fermée par une tête de vis (47) de la vis de fixation (7a) introduite.

7. Système de vannes selon la revendication 6, **caractérisé en ce que** la tête de vis (46) est bloquée de manière étanche, sans élément d'étanchéité supplémentaire, avec le boîtier (22) de l'unité de vannes (5), sachant qu'au moins la partie du boîtier (22), coopérant avec la tête de vis (46), est réalisée judicieusement en matière plastique.

8. Système de vannes selon l'une quelconque des revendications 1 à 7, **caractérisé en ce que** tant l'ouverture d'admission du fluide (36, 39) que l'ouverture de sortie du fluide (38) communiquent avec respectivement un conduit (8) s'étendant dans l'unité de vannes (5).

9. Système de vannes selon l'une quelconque des revendications 1 à 8 **caractérisé en ce que** le conduit de réception de vis (7b), dans la zone de la bouche frontale (42), orientée vers le support de vannes (3), comporte une extrémité (56) élargie en section, dans laquelle s'étend judicieusement un tronçon fileté (52), à section plus petite, de la tige (47) de la vis de fixation (7a).

10. Système de vannes selon l'une quelconque des revendications 1 à 9, **caractérisé en ce que** le conduit de circulation du fluide (28b) forme un tronçon longitudinal d'un conduit de détente de pression (28) traversant l'unité de vannes (5) et communiquant avec l'air ambiant.

11. Système de vannes selon l'une quelconque des revendications 1 à 10, **caractérisé en ce que** l'unité de vannes (5) comporte un boîtier (22) avec une partie principale (23), logeant au moins un élément de vanne (18), et au moins couvercle (24) attaché du côté frontal à la partie principale (23), sachant que ledit au moins un conduit de réception de vis (7b), utilisé comme conduit de circulation du fluide (28b), traverse le couvercle (24) du boîtier.

12. Système de vannes selon l'une quelconque des revendications 1 à 11, **caractérisé en ce que** ladite au moins une unité de vannes (5) est réalisée sous la forme d'une vanne multivoie, pilotée par voie électro-fluidique.

13. Système de vannes selon l'une quelconque des revendications 1 à 12, **caractérisé en ce qu'**il contient plusieurs unités de vannes (5) montées ou pouvant être montées les unes à côté des autres sur le même support de vannes (3).
